(19) Europäisches Patentamt
European Patent Office
Office européen des brevets

(11) **EP 1 858 940 B1**

(12) **FASCICULE DE BREVET EUROPEEN**

(45) Date de publication et mention
de la délivrance du brevet:
**25.04.2012 Bulletin 2012/17**

(21) Numéro de dépôt: **06726099.2**

(22) Date de dépôt: **17.03.2006**

(51) Int Cl.:
*C08F 293/00* (2006.01)     *C08F 2/38* (2006.01)

(86) Numéro de dépôt international:
**PCT/FR2006/000595**

(87) Numéro de publication internationale:
**WO 2006/097641 (21.09.2006 Gazette 2006/38)**

(54) **COMPOSITION NON COSMETIQUE COMPRENANT UN COPOLYMERE A BLOCS POUVANT ETRE UTILE COMME TENSEUR**

NICHT KOSMETISHCE ZUSAMMENSETZUNG ENTHALTEND EIN BLOCKCOPOLYMER ZUR VERWENDUNG ALS TENSORMATERIAL

NON COSMETIC COMPOSITION COMPRISING A BLOCK COPOLYMER USEFUL AS TENSIONER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.03.2005 FR 0502669**

(43) Date de publication de la demande:
**28.11.2007 Bulletin 2007/48**

(73) Titulaire: **RHODIA CHIMIE**
**93306 Aubervilliers Cedex (FR)**

(72) Inventeur: **BZDUCHA, Wojciech**
**F-92400 Courbevoie (FR)**

(56) Documents cités:
**WO-A-01/16187          US-A- 6 153 705**
**US-A1- 2001 034 428    US-A1- 2003 212 213**
**US-A1- 2005 054 794    US-B1- 6 545 098**
**US-B1- 6 777 513**

EP 1 858 940 B1

**Description**

La présente invention a pour objet une nouvelle composition non cosmétique comprenant un copolymère linéaire à blocs, qui peut être utile comme tenseur de surfaces. Le copolymère comprend notamment un bloc à base de styrène, et un bloc à base d'acrylate d'éthyle ou de méthacrylate d'éthyle.

Il existe un besoin constant de l'industrie pour de nouveaux composés chimiques, pouvant apporter de nouveaux bénéfices, par exemple des bénéfices apportés à un consommateur par une composition comprenant un composé chimique ou des bénéfices en terme de mise en oeuvre de processus industriels, ou pouvant simplifier techniquement ou économiquement l'obtention de ces bénéfices.

Récemment, de nombreux documents ont décrit des copolyméres à blocs, de compositions variées, et des utilisations pour apporter des bénéfices variés.

On a ainsi décrit l'utilisation de certains copolymères à blocs dans les domaines de la cosmétique, des soins ménagers, des revêtements et peintures, pour modifier des surfaces par exemple la peau et/ou les cheveux dans le domaine cosmétique du linge, des surfaces dures ou de la vaisselle dans le domaine des soins ménager. On a également décrit l'utilisation de copolymères à blocs pour des effets d'émulsification, de dispersion de particules solides, de formation de films, ou comme aides à l'obtention de ces effets.

Le document WO 03/095513 décrit des copolymères à blocs comprenant un bloc. A comprenant des unités dérivant de styrène, et un bloc B comprenant des unités dérivant d'acrylate d'éthyle, avec un rapport massique entre le bloc A et le bloc B inférieur à 0,5. Les copolymères sont élastomériques et ne conviennent pas comme tenseurs de surfaces.

Le document WO 01/16187 décrit des copolymères à blocs "produits intermédiaires" comprenant un bloc A comprenant des unités dérivant de styrène et un bloc B comprenant des unités dérivant d'acrylate d'éthyle. Ces copolymères à blocs sont ensuite hydrolysés pour former des copolymères à blocs comprenant un bloc A comprenant des unités dérivant de styrène et un bloc B' comprenant des unités dérivant d'acide acrylique (hydrolysat de l'acrylate d'éthyle) et des unités dérivant d'acrylate d'éthyle (non hydrolysées). Les copolymères à blocs "produits intermédiaires" ont un rapport massique entre le bloc A et le bloc B inférieur à 1. Aucune propriété n'est donnée quant ce produit intermédiaire.

Il existe un besoin pour de nouveaux copolymères à blocs, notamment pour des copolymères à blocs pouvant être utilisés comme tenseur de surfaces.

La présente invention satisfait ce besoin en proposant des compositions non cosmétiques comprenant un copolymère linéaire à blocs A-[B-A]$_n$ ou B-[A-B]$_n$ ou [A-B]$_n$ dans lequel A est un bloc comprenant au moins 50% en poids d'unités dérivant de styrène, B est un bloc comprenant au moins 50% en poids d'unités dérivant d'acrylate d'éthyle ou de méthacrylate d'éthyle, et n est un nombre supérieur ou égal à 1, caractérisé en ce que le rapport en poids entre les unités dérivant de styrène et les unités dérivant d'acrylate d'éthyle ou de méthacrylate d'éthyle est supérieur ou égal à 1. et un vecteur de préférence liquide, aqueux ou non.

La présente invention concerne également l'utilisation d'une composition selon l'invention, pour le traitement et/ou la modification et/ou le revêtement de surfaces textiles, de surfaces domestiques ou industrielles, et/ou de surfaces de bâtiments et travaux publics.

Définitions

Dans la présente demande, on désigne par unité dérivant d'un monomère une unité qui peut être obtenue directement à partir dudit monomère par polymérisation. Ainsi, par exemple, une unité dérivant d'un ester d'acide acrylique ou méthacrylique ne couvre pas une unité de formule -CH$_2$-CH(COOH)-, ou -CH$_2$-C(CH$_3$)(COOH)-, obtenue par exemple en polymérisant un ester d'acide acrylique ou méthacrylique, puis en hydrolysant.

Dans la présente demande, sauf mention contraire, la masse moléculaire moyenne d'un bloc ou d'un copolymère désigne la masse moléculaire moyenne théorique ou "visée" d'un bloc ou d'un copolymère.

La masse moléculaire moyenne théorique M$_{bloc}$ d'un bloc, est typiquement calculée selon la formule suivante:

$$M_{bloc} = \sum_i M_i * \frac{n_i}{n_{precursor}} \, ,$$

où M$_i$ est la masse molaire d'un monomère i, n$_i$ est le nombre de moles du monomère i, n$_{precursor}$ est le nombre de moles de fonctions auquel sera liée la chaîne macromoléculaire du bloc. Les fonctions peuvent provenir d'un agent de transfert (ou un groupe de transfert) ou un amorceur, un bloc précédent etc. S'il s'agit d'un bloc précédent, le nombre de moles peut être considéré comme le nombre de moles d'un composé auquel la chaîne macromoléculaire dudit bloc précédent a été liée, par exemple un agent de transfert (ou un groupe de transfert) ou un amorceur. En pratique, les masses moléculaires moyennes théoriques sont calculées à partir du nombre de moles de monomères introduits et du nombre de moles de précurseur introduit.

Dans la présente demande, la masse moléculaire moyenne théorique d'un copolymère est déterminée par addition des masses moléculaires moyennes théoriques des blocs.

Dans la présente demande, la masse moléculaire moyenne mesurée d'un premier bloc ou d'un copolymère désigne la masse moléculaire moyenne en nombre en équivalents polystyrène d'un bloc ou d'un copolymère, mesurée par chromatographie d'exclusion stérique (SEC), dans du THF, avec une calibration à l'aide d'étalons de polystyrène. La masse moléculaire moyenne mesurée d'un $n^{eme}$ bloc dans un copolymère à n blocs est définie comme la différence entre la masse moléculaire moyenne mesurée du copolymère et la masse moléculaire moyenne mesurée du copolymère à (n-1) blocs à partir duquel il est préparé.

Copolymère

Le copolymère est un copolymère linéaire à blocs A-[B-A]$_n$ ou B-[A-B]$_n$ ou [A-B]$_n$. Les blocs A et B s'enchaînes linéairement. Si n=1 le copolymère est un copolymère tribloc A-B-A ou B-A-B, ou un copolymère dibloc A-B. Si n=2, le copolymère est un copolymère A-B-A-B-A, ou B-A-B-A-B ou A-B-A-B. Si n≥3, il ne s'agit pas d'un copolymère étoile ou téléchélique dans lequel un bloc A ou un bloc B constituerait un coeur. De préférence, n =1, plus préférablement le copolymère est un copolymère tribloc A-B-A. On note que le copolymère peut comprendre des fonctions ou groupes de polymérisation ou des résidus de tels fonctions ou groupes, en bouts de chaînes macromoléculaires. Il peut s'agir par exemple de groupes de transfert, ou des résidus de groupes de transfert, comprenant par exemple un groupe de formule -S-CS-, ou un résidu de ce groupe.

Le bloc Á comprend au moins 50% en poids d'unités dérivant de styrène (par rapport au poids total du bloc A). Le bloc A peut comprendre d'autres unités que celles dérivant du styrène, pouvant être destinées à moduler des propriétés du copolymère ou à faciliter sa préparation. Le bloc A peut donc être un copolymère statistique comprenant des unités dérivant de styrène et d'autres unités. On peut ainsi moduler la solubilité du bloc A dans l'eau ou dans d'autres milieux, ou moduler sa température de transition vitreuse et ainsi moduler sa rigidité. Les autres unités du bloc A peuvent être des unités dérivant de monomères choisis parmi l'acide acrylique, l'acide méthacrylique, l'acrylate de méthyle, d'éthyle, de butyle, d'ethylhexyle, ou de 2-hydroxyéthyle, ou de méthacrylate de méthyle, d'éthyle, de butyle, d'ethylhexyle, ou de 2-hydroxyéthyle. La présence de faibles quantités d'acide méthacrylique peut notamment faciliter la préparation du copolymère, le bloc A peut par exemple en comprendre de 0, 1 % à moins de 5% en poids par rapport au poids total du bloc A. Le bloc A comprend de préférence au moins 75% en poids, de préférence au moins 90% en poids, de préférence au moins 95% en poids, d'unités dérivant de styrène (par rapport au poids total du bloc A).

Le bloc B comprend au moins 50% en poids d'unités dérivant d'acrylate d'éthyle ou de méthacrylate d'éthyle. Le bloc B peut comprendre d'autres unités que celles dérivant d'acrylate d'éthyle ou de méthacrylate d'éthyle, pouvant être destinées à moduler des propriétés du copolymère ou à faciliter sa préparation. Le bloc B peut donc être un copolymère statistique comprenant des unités dérivant de d'acrylate d'éthyle ou de méthacrylate d'éthyle et d'autres unités. On peut ainsi moduler la solubilité du bloc B dans l'eau ou dans d'autres milieux, ou moduler sa température de transition vitreuse et ainsi moduler sa rigidité. Les autres unités du bloc B peuvent être des unités dérivant de monomères choisis parmi l'acide acrylique, l'acide méthacrylique, l'acrylate de méthyle, de butyle, d'ethylhexyle, ou de 2-hydroxyéthyle, ou de méthacrylate de méthyle, de butyle, d'ethylhexyle, ou de 2-hydroxyéthyle, ou du styrène. La présence de faibles quantités d'acide méthacrylique peut notamment faciliter la préparation du copolymère, le bloc B peut par exemple en comprendre de 0,1 % à moins de 5% en poids (par rapport au poids total du bloc B). Le bloc B peut alternativement ne pas comprendre d'unités dérivant d'acide méthacrylique. Le bloc A comprend de préférence au moins 75% en poids, de préférence au moins 90% en poids, de préférence au moins 95% en poids, d'unités dérivant d'acrylate d'éthyle ou de méthacrylate d'éthyle (par rapport au poids total du bloc B).

Le rapport en poids entre les unités de dérivant de styrène et les unités dérivant d'acrylate d'éthyle ou de méthacrylate d'éthyle est supérieur ou égal à 1, de préférence supérieur ou égal à 1,5, de préférence supérieur ou égal à 2,01, de préférence supérieur ou égal à 2,5, de préférence supérieur ou égal à 5. Le rapport peut être déterminé en faisant le rapport entre les monomères introduits pour la préparation du copolymère, ou en faisant le rapport entre les masses moléculaires moyennes des blocs. De préférence, le rapport entre les masses moléculaires moyennes des blocs est supérieur ou égal à 1, de préférence supérieur ou égal à 1,5, de préférence supérieur ou égal à 2,01, de préférence supérieur ou égal à 2,5, de préférence supérieur ou égal à 5.

Selon un mode de réalisation particulier le copolymère est différent d'un copolymère dibloc A-B dans lequel le rapport en poids entre les unités de dérivant de styrène et les unités dérivant d'acrylate d'éthyle ou de méthacrylate d'éthyle est inférieur à 1,5, ou inférieur à 2,01 ou inférieur à 2,5 ou inférieur à 5. De préférence le copolymère est différent d'un copolymère dibloc A-B.

Selon un mode avantageux, le copolymère présente une masse moléculaire moyenne comprise entre 20000 et 1000000 g/mol, de préférence entre 50000 et 200000 g/mol. Le bloc A présente avantageusement une masse moléculaire moyenne comprise entre 1000 et 200000 g/mol, de préférence entre 10000 et 100000 g/mol. Le bloc B présente avantageusement une masse moléculaire moyenne comprise entre 1000 et 100000 g/mol, de préférence entre 2000 et 50000 g/mol.

Le copolymère peut présenter une masse moléculaire moyenne mesurée comprise entre 20000 et 1000000 g/mol, de préférence entre 50000 et 200000 g/mol. Le bloc A peut présenter avantageusement une masse moléculaire moyenne mesurée comprise entre 1000 et 200000 g/mol, de préférence entre 10000 et 100000 g/mol. Le bloc B peut présenter avantageusement une masse moléculaire moyenne mesurée comprise entre 1000 et 100000 g/mol, de préférence entre 2000 et 50000 g/mol.

Le copolymère peut avantageusement présenter une recouvrance instantanée $R_i$ < 50%, de préférence $R_i$ < 30%, et une recouvrance retardée $R_{2h}$ < 70%, de préférence $R_{2h}$ < 50%, après un allongement de 30%. Ce mode de réalisation est particulièrement avantageux dans le cadre d'une utilisation du copolymère comme tenseur.

Les recouvrances peuvent être déterminées selon le protocole suivant:

On prépare un film de copolymère par coulage d'une solution ou dispersion du copolymère dans une matrice teflonnée puis on le sèche pendant 7 jours dans une ambiance contrôlée à 23±5°C et 50±10% d'humidité relative. On obtient alors un film d'environ 100 μm d'épaisseur dans lequel sont découpées des éprouvettes rectangulaires (par exemple à l'emporte pièce) d'une largeur de 15 mm et d'une longueur de 80 mm.

On impose à ces échantillons sous forme d'éprouvettes une sollicitation de traction à l'aide d'un appareil commercialisé sous la référence Zwick, dans les mêmes conditions de température et d'humidité que pour le séchage.

Les éprouvettes sont étirées à une vitesse de 50 mm/min et la distance entre les mors est de 50 mm, ce qui correspond à la longueur initiale ($l_0$) de l'éprouvette. On détermine la recouvrance instantanée $R_i$ de la manière suivante:

- on étire l'éprouvette de 30% ($\varepsilon_{max}$), c'est-à-dire environ 0,3 fois sa longueur initiale ($l_0$);
- on relache la contrainte en imposant une vitesse de retour égale à la vitesse de traction, soit 50 mm/min et on mesure l'allongement résiduel de l'éprouvette en pourcentage, après retour à la contrainte nulle ($\varepsilon_i$).

La recouvrance instantanée $R_i$ (en %) est déterminée par la formule suivante:

$$R_i = 100 * (\varepsilon_{max} - \varepsilon_i), / (\varepsilon_{max}).$$

Pour déterminer la recouvrance retardée, on mesure l'allongement résiduel de l'éprouvette en pourcentage ($\varepsilon_{2h}$), deux heures après retour à la contrainte nulle. La recouvrance retardée $R_{2h}$ (en %) est déterminée par la formule suivante:

$$R_{2h} = 100 * (\varepsilon_{max} - \varepsilon_{2h}), / (\varepsilon_{max}).$$

Des copolymères utiles sont notamment les suivants:

- copolymère tribloc A-B-A' (ou plus simplement A-B-A) où:

  - le bloc A est un premier bloc de masse moléculaire moyenne théorique de 30000 g/mol, comprenant au moins 95% en poids d'unités dérivant de Styrène, et au moins 0.1 % en poids d'unités dérivant d'acide méthacrylique,
  - le bloc B est un deuxième bloc de masse moléculaire moyenne théorique de 10000 g/mol, comprenant au moins 95%, de préférence 100%, en poids d'unités dérivant d'acrylate d'éthyle
  - le bloc A' est un troisième bloc de masse moléculaire moyenne théorique de 30000 g/mol, comprenant au moins 95% en poids d'unités dérivant de Styrène, et au moins 0.1% en poids d'unités dérivant d'acide méthacrylique, ou

- copolymère tribloc A-B-A' (ou plus simplement A-B-A) où:

  - le bloc A est un premier bloc de masse moléculaire moyenne théorique de 25000 g/mol, comprenant au moins 95% en poids d'unités dérivant de Styrène, et au moins 0.1 % en poids d'unités dérivant d'acide méthacrylique
  - le bloc B est un deuxième bloc de masse moléculaire moyenne théorique de 20000 g/mol, comprenant au moins 95%, de préférence 100%, en poids d'unités dérivant d'acrylate d'éthyle,
  - le bloc A' est un troisième bloc de masse moléculaire moyenne théorique de 25000 g/mol, comprenant au moins 95% en poids d'unités dérivant de Styrène, et au moins 0.1 % en poids d'unités dérivant d'acide méthacrylique, ou

- copolymère tribloc A-B-A' (ou plus simplement A-B-A) où:

  - le bloc A est un premier bloc de masse moléculaire moyenne théorique de 32500 g/mol, comprenant au moins 95% en poids d'unités dérivant de Styrène, et au moins 0.1 % en poids d'unités dérivant d'acide méthacrylique
  - le bloc B est un deuxième bloc de masse moléculaire moyenne théorique de 5000 g/mol, comprenant au moins 95%, de préférence 100%, en poids d'unités dérivant d'acrylate d'éthyle,
  - le bloc A' est un troisième bloc de masse moléculaire moyenne théorique de 32500 g/mol, comprenant au moins 95% en poids d'unités dérivant de Styrène, et au moins 0.1% en poids d'unités dérivant d'acide méthacrylique.

Le copolymère selon l'invention peut être présenté sous forme d'une solution ou d'une dispersion dans un milieu liquide, ou sous forme solide, par exemple sous forme de poudre, d'écailles, ou de film. On le présente de préférence sous forme d'une dispersion insoluble dans l'eau. On peut parler d'un polymère en émulsion ou sous forme d'un latex. La concentration en polymère dispersé dans l'eau peut par exemple être comprise entre 5 et 70% en poids, de préférence entre 25% et 55% en poids. La forme de dispersion insoluble dans l'eau peut être avantageusement celle sous laquelle le copolymère est issu de son procédé de préparation. Les concentrations peuvent être ajustées en jouant sur des paramètres de procédé de polymérisation (quantités relatives de monomère et d'eau mises en oeuvre), ou en opérant des dilutions ou concentrations à la suite de la polymérisation.

Procédé de préparation du copolymère

Les copolymères selon l'invention peuvent être obtenus par toute méthode connue, que ce soit par polymérisation radicalaire, contrôlée ou non, par polymérisation par ouverture de cycle (notamment anionique ou cationique), par polymérisation anionique ou cationique, ou encore par modification chimique d'un polymère.
De manière préférée, on met en oeuvre des méthodes de polymérisation radicalaire dite vivante ou contrôlée, et de manière particulièrement préférée des méthodes de polymérisation radicalaire contrôlée ou vivante mettant en oeuvre un agent de transfert comprenant un groupe de formule -S-CS-, notamment connues sous les dénominations de RAFT ou MADIX.
A titre d'exemples de procédés de polymérisation dite vivante ou contrôlée, on peut notamment se référer à :

- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 98/01478,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiocarbazates de la demande WO 02/26836,
- le procédé de polymérisation radicalaire contrôlée par des agents de contrôle de type dithiophosphoroesters de la demande WO 02/10223,
- (éventuellement les copolymères à blocs obtenus comme ci-dessus par polymérisation radicalaire contrôlée, peuvent subir une réaction de purification de leur extrémité de chaîne soufrée, par exemple par des procédés de type hydrolyse, oxydation, réduction, pyrolyse, ozonolyse ou substitution)
- le procédé de la demande WO 99/03894 qui met en oeuvre une polymérisation en présence de précurseurs nitroxydes, ou les procédés mettant en ouvre d'autres nitroxydes ou complexes nitroxydes / alkoxyamines
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- le procédé de polymérisation radicalaire contrôlée par les dérivés du tetraphényléthane, divulgué par D. Braun et al. Dans Macromol. Symp. 111,63 (1996), ou encore,
- le procédé de polymérisation radicalaire contrôlée par des complexes organocobalt décrit par Wayland et al. Dans J.Am.Chem.Soc. 116,7973 (1994)
- le procédé de polymérisation radicalaire contrôlée par du diphénylethylène (WO 00/39169 ou WO 00/37507).

A l'aide des procédés décrits ci-dessus, on peut opérer la préparation d'un premier bloc à partir de monomères ou d'un mélange de monomères d'initiateurs et/ou d'agents favorisant le contrôle de la polymérisation (agents de transferts à groupes -S-CS-, nitroxydes etc...), puis la croissance d'un deuxième bloc sur le premier bloc pour obtenir un copolymère dibloc avec des monomères différents de ceux utilisés pour la préparation du bloc précédent, et éventuellement avec ajout d'initiateurs et/ou d'agents favorisant le contrôle de la polymérisation, puis la croissance d'un troisième bloc à partir sur le copolymère dibloc pour obtenir un copolymère tribloc, etc... Ces procédés de préparations de copolymères à blocs sont connus de l'homme du métier. On mentionne que le copolymère peut présenter en bout de chaîne un groupe de transfert ou un résidu d'un groupe de transfert, par exemple un groupe comprenant un groupe -S-CS- (par exemple issu d'un Xanthate ou d'un dithioester) ou un résidu d'un tel groupe.

On mentionne que les copolymères à tribloc obtenus par des procédés mettant en oeuvre trois séquences successives de polymérisation sont souvent décrits comme des copolymères à blocs A-B-C. Dans le cas où la composition et la masse moléculaire du troisième bloc C sont sensiblement identiques à la composition et la masse moléculaire du premier bloc A (les quantités et proportions de (co)monomères étant sensiblement identiques), les copolymères tribloc peuvent être décrits comme des copolymères tribloc A-B-A' ou par extension ou simplification comme des copolymères tribloc A-B-A.

Ainsi on peut par exemple préparer un copolymère tribloc A-B-A selon l'invention, par un procédé comprenant les étapes suivantes:

- étape a): préparation du bloc A par polymérisation, de préférence radicalaire contrôlée, d'une composition comprenant:

  - le styrène
  - une source de radicaux libres, et
  - au moins un agent de contrôle, de préférence un agent comprenant un groupe -S-CS-, par exemple un xanthate ou un dithioester,

- étape b) obtention du copolymère dibloc A-B, par croissance du bloc B sur le bloc A, par polymérisation, de préférence radicalaire contrôlée, d'une composition comprenant:

  - l'acrylate d'éthyle ou le méthacrylate d'éthyle, et
  - éventuellement une source de radicaux libres,

- étape c) obtention du copolymère tribloc A-B-A, par croissance du bloc A sur le dibloc A-B, par polymérisation, de préférence radicalaire contrôlée, d'une composition comprenant:

  - l'acrylate d'éthyle ou le méthacrylate d'éthyle, et
  - éventuellement une source de radicaux libres,

- étape d) éventuellement destruction ou désactivation d'un groupe de l'agent de contrôle.

Selon d'autres modes de réalisations, on prépare des copolymères tribloc A-B-A en deux séquences de polymérisation, à l'aide d'agents comprenant deux groupes de transfert ou d'agents comprenant un groupe de transfert permettant un transfert à chaque extrémité du groupe, par exemple un trithiocarbonate comprenant un groupe de formule -S-CS-S-. Dans de tels procédés, les blocs A sont parfaitement identiques, et le bloc B comprend généralement un groupe central différent des unités de répétition du bloc B. La mention de la présence d'un groupe central au sein du bloc B, noté par exemple -X-, -X-Z'-X- ou R' plus bas, est souvent omise par soucis de simplification.

Ainsi on peut préparer des copolymères tribloc A-B-A par le procédé suivant:

- étape a'): préparation d'un polymère de formule R-A-X-A-R par polymérisation d'une composition comprenant:

  - le styrène
  - une source de radicaux libres, et
  - au moins un agent de contrôle de formule R-X-R où R, identique ou différent est un groupe organique, et X est un groupe de transfert, l'agent étant de préférence un trithiocarbonate comprenant un groupe X- de formule -S-CS-S- et de préférence deux groupes R identiques tels que les groupes benzyles (l'agent étant donc par exemple le dibenzyltrithiocarbonate),

- étape b') obtention du copolymère tribloc R-A-B-X-B-A-R (ou plus simplement A-B-A), par croissance du bloc B sur les blocs A par polymérisation, de préférence radicalaire contrôlée, d'une composition comprenant:

  - l'acrylate d'éthyle ou le méthacrylate d'éthyle, et

- éventuellement une source de radicaux libres.

On peut également préparer des copolymères tribloc A-B-A par le procédé suivant:

- étape a"): préparation d'un polymère de formule R-A-X-Z'-X-A-R par polymérisation d'une composition comprenant:

  - le styrène
  - une source de radicaux libres, et
  - au moins un agent de contrôle de formule R-X-Z'-X-R où R, identique ou différent, est un groupe organique, Z' est un groupe organique divalent, et X est un groupe de transfert, de préférence un groupe de transfert comprenant un groupe -S-CS-, ledit agent étant par exemple

    - un agent comprenant deux groupes xanthates, où -X- est un groupe de formule -S-CS- formant avec -Z'- un groupe de formule -S-CS-O-(xanthate), Z' étant par exemple un groupe de formule $-O-CH_2-CH_2-O-$, et R est par exemple un groupe benzyle ou un groupe de formule $H_3C-OOC-CH(CH_3)-$ , ou
    - un agent comprenant deux groupes dithioesters, où -X- est un groupe de formule -S-CS- formant avec -Z'- un groupe de formule -S-CS-C- (dithioester), Z' étant par exemple un groupe phényle ou benzyle, ou un groupe de formule $-CH_2-C_6H_5-CH_2-$, et R est par exemple un groupe benzyle,

- étape b") obtention du copolymère tribloc R-A-B-X-Z'-X-B-A-R (ou plus simplement A-B-A), par croissance du bloc B sur les blocs A par polymérisation, de préférence radicalaire contrôlée, d'une composition comprenant:

  - l'acrylate d'éthyle ou le méthacrylate d'éthyle, et
  - éventuellement une source de radicaux libres.

On peut également préparer des copolymères tribloc A-B-A par le procédé suivant:

- étape a'''): préparation d'un polymère de formule Z-X-B-R'-B-X-Z par polymérisation d'une composition comprenant:

  - l'acrylate d'éthyle ou le méthacrylate d'éthyle, et
  - une source de radicaux libres, et
  - au moins un agent de contrôle de formule Z-X-R'-X-Z où Z, identique ou différent, est un groupe organique, R' est un groupe organique divalent, et X est un groupe de transfert, de préférence un groupe de transfert comprenant un groupe -S-CS-, ledit agent étant par exemple:

    - un agent comprenant deux groupes xanthates, où -X- est un groupe de formule -S-CS- formant avec Z- un groupe de formule -O-CS-S-(xanthate), Z- étant par exemple un groupe éthoxy, et -R'- est par exemple un groupe phényle ou benzyle, ou un groupe de formule - $CH_2-C_6H_5-CH_2-$,
    - un agent comprenant deux groupes dithioesters, où -X- est un groupe de formule -S-CS- formant avec Z- un groupe de formule C-CS-S- (dithioester), Z- étant par exemple un groupe phényle ou benzyle, et -R'- est par exemple un groupe phényle ou benzyle, ou un groupe de formule $-CH_2-C_6H_5-CH_2-$,

- étape b''') obtention du copolymère tribloc Z-X-A-B-R'-B-A-X-Z (ou plus simplement A-B-A), par croissance du bloc A sur les blocs B par polymérisation, de préférence radicalaire contrôlée, d'une composition comprenant:

  - le styrène, et
  - éventuellement une source de radicaux libres,

- étape d''') éventuellement destruction ou désactivation d'un groupe de l'agent de contrôle.

Les polymérisations peuvent être effectuées sous toute forme physique appropriée, par exemple en solution dans un solvant, en émulsion dans l'eau (procédé dit "latex"), en masse, le cas échéant en contrôlant la température et/ou le pH afin de rendre des espèces liquides et/ou solubles ou insolubles.

Compositions

Le copolymère peut être utilisé dans une composition non cosmétique (composition qui n'est pas destinée à être appliqué sur une surface kératinique).

La composition comprend le copolymère et un vecteur. De préférence le vecteur est un vecteur liquide, qui peut être aqueux ou non.

Le vecteur peut notamment être un substance ou un mélange permettant la mise en solution du copolymère. On peut parler d'un solvant ou d'un mélange solvant. Le vecteur peut également être une substance permettant la mise en dispersion du copolymère. Outre le copolymère et le vecteur, la composition peut bien entendu comprendre d'autres ingrédients, pouvant être présents dans la composition sous des formes variées, par exemple sous des formes de solutions, d'émulsions ou de dispersions. La composition peut ainsi être une émulsion dont l'une des phases est le vecteur. Par exemple il peut s'agir d'une émulsion huile dans eau, le vecteur étant la phase aqueuse. Le copolymère peut notamment être compris dans un vecteur qui est lui-même une phase d'une composition complexe comprenant ladite phase.

A titre de compositions non cosmétiques, on cite notamment les compositions pour le traitement et/ou la modification et/ou le revêtement de surfaces textiles, de surfaces domestiques ou industrielles, et/ou de surfaces de bâtiments et travaux publics.

Il peut notamment s'agir:

- d'une composition détergente pour surfaces dures,
- d'une lessive (pour surfaces textiles),
- d'un adoucissant pour textile,
- d'une composition pour faciliter le repassage de textiles, ou
- d'une composition de revêtement, par exemple une peinture, ou un revêtement à liant hydraulique comme un apprêt mural ou du plâtre.

Les compositions peuvent notamment comprendre, selon la destination:

- des tensioactifs, par exemple des tensioactifs anioniques, cationiques, non ioniques, et/ou amphotères (dont les tensioactifs zwitterioniques), par exemple pour des compositions détergentes pour surfaces dures ou pour des lessives,
- des adoucissants pour textiles, notamment des tensioactifs cationiques ou polymères différents du copolymère de l'invention, par exemple des polymères naturels comme l'amidon, des dérivés de polymères, notamment des dérivés cationiques, des polymères synthétiques, notamment des polymère synthétiques cationiques, des huiles silicones,
- des agents de modification de la rhéologie, par exemple des agents épaississants, ou des agents gélifiants,
- des agents de formation de revêtements, par exemple des monomères, oligomères ou polymères pouvant former des films et/ou étant susceptibles de réticuler, des liants non hydrauliques, notamment pour des revêtement tels que des peintures,
- des liants hydrauliques, pour des revêtements à liants hydrauliques, comme des plâtres ou des apprêts muraux,
- des solvants ou co-solvants.

La quantité en poids du copolymère (exprimée en matière sèche) dans la composition peut avantageusement comprise entre 0,5 et 20%, de préférence entre 1 et 10%,

Procédé de traitement et/ou modification et/ou revêtement de surfaces et utilisations

Le copolymère peut être utilisé pour le traitement et/ou le modification et/ou le revêtement de surfaces non kératiniques. Le traitement est un procédé comprenant une étape d'application sur la surface d'une composition comprenant le copolymère. Des surfaces et des compositions ont été décrits plus haut. Après application de la composition, le vecteur, selon sa nature, peut être éliminé, par exemple par absorption, adsorption et/ou évaporation. L'évaporation peut être naturelle ou accélérée par un chauffage.

Le traitement et/ou la modification et/ou le revêtement sont liés à l'application de la composition. Une surface traitée et/ou modifiée et/ou revêtue est une surface qui comprend des éléments de la surface avant le traitement, et le copolymère.

Des surfaces pouvant être ainsi traitées comprennent:

- des surfaces textiles, typiquement du linge,
- des surfaces dures, comme des surfaces domestiques, par exemple, des surfaces en métal, céramique, verre, ou plastique, typiquement des surfaces de cuisines ou de salle de bain ou de toilettes, ou des vitres,
- des murs (dont les plafonds) dans les domaines de du bâtiment et des travaux publics,
- des carrosseries automobiles.

Le copolymère peut ainsi être utilisé en tant qu'agent tenseur de surfaces. Pour les surfaces textiles, il peut notamment retarder l'apparition d'un froissement avec l'usage, et/ou éviter de repasser après un lavage à la main ou en machine, et ou faciliter le repassage. Pour les surfaces domestiques et/ou industrielles et de bâtiment et de travaux publics, par exemple des compositions de revêtement, telles que des peintures ou des compositions à liant hydraulique, il peut éviter ou limiter la formation de craquellements lors du séchage ou après, lors d'un vieillissement ou de la soumission d'efforts plus ou moins importants, par exemple liés à des variations de températures, à des déformations, ou à des mouvements de terrain.

D'autres détails ou avantages de l'invention pourront apparaître au vu des exemples qui suivent, sans caractère limitatif.

Exemple 1a: Préparation d'un copolymère tribloc polystyrène-bloc-poly(acrylate d'éthyle)-bloc-polystyrène "$pS_{30k}$-$pEA_{10k}$-$pS_{30k}$"

Le mode opératoire est basé sur un procédé qui peut se décomposer en trois phases distinctes, une première étape qui est l'obtention d'un bloc polystyrène, une deuxième étape qui est la synthèse d'un bloc poly(acrylate d'éthyle) à la suite du premier bloc et une troisième étape qui la synthèse d'un bloc polystyrène à la suite du deuxième bloc, pour obtenir le tribloc polystyrène-b-poly(acrylate d'éthyle)-b-polystyrène.

La synthèse de ce copolymère est réalisée dans un réacteur verré de 2 litres de type SVL. La charge utile maximum de ce type de réacteur est de 1.5 litres. La température interne du réacteur est régulée par un cryostat de type Huber. La mesure de la température est assurée par une sonde pt 100 plongeant dans le réacteur et servant à la régulation. Le mobile d'agitation est une ancre en inox. La vitesse de rotation du mobile est de l'ordre de 200 tr/min. Le réacteur est également équipé d'un dispositif de reflux (réfrigèrent à serpentin) suffisamment efficace pour permettre le reflux des monomères sans pertes de produit..

Le procédé mis en oeuvre est un procédé de polymérisation en émulsion dans l'eau, de type latex.

Etape 1: Préparation d'un premier bloc de polystyrène de masse moléculaire théorique d'environ 30000 g/mol "$pS_{30k}$"

En réalité c'est une synthèse d'un copolymère statistique de styrène et d'acide méthacrylique, avec rapport massique St/AMA = 98/2. Masse théorique visée : $M_n$ = 30000 g/mol. On se réfère à un bloc de polystyrène par soucis de simplicité de la terminologie.

En pied de cuve, on introduit, à température ambiante, 568,0 g d'eau, 12,0 g de dodecyl sulfate de sodium et 0,95 g de carbonate de sodium $Na_2CO_3$. Le mélange obtenu est agité pendant 30 minutes (200 tr/min) sous azote. La température est ensuite élevée à 75°C, puis on ajoute un mélange 1 comprenant :

- 25,71 g de styrène (St),
- 0,510 g d'acide méthacrylique (AMA), et
- 1,790 g de xanthate $(CH_3)(CO_2CH_3)CH-S(C=S)OCH_2CH_3$.

Le mélange est porté à 85°C, puis on introduit une solution de 0,390 g de persulfate d'ammonium $(NH_4)_2S_2O_8$ solubilisé dans 10,0 g d'eau.

Après 5 minutes, on démarre l'addition d'un mélange 2 comprenant :

- 231,4 g de styrène (St) et
- 4,60 g d'acide méthacrylique (AMA).

On poursuit l'addition pendant 115 minutes. Après addition complète des divers ingrédients, l'émulsion de copolymère obtenue est maintenue à 85°C pendant deux heures.

Un échantillon (~5g) est alors prélevé et analysé par chromatographie d'exclusion stérique (SEC) dans du THF. Sa masse moléculaire moyenne en nombre mésurée $M_n$ est égale à 26600 g/mol en équivalents polystyrène (calibration par des étalons de polystyrène linéaires). Son indice de polymolécularité $M_w/M_n$ est égal à 2,0.

Une analyse de l'échantillon par chromatographie gazeuse révèle que la conversion des monomères est supérieure à 99%.

Etape 2: Préparation d'un deuxième bloc de poly(acrylate d'éthyle) de masse moléculaire théorique d'environ 10 000 g/mol pour obtenir un copolymère dibloc polystyrène-bloc-poly(acrylate d'éthyle), "$pS_{30k}$-$pEA_{10k}$"

On part du copolymère en émulsion obtenu précédemment à l'étape 1 après en avoir prélevé ~5 g pour analyse et sans arrêter le chauffage.

On introduit en continu pendant une heure 0,390 g de persulfate d'ammonium $(NH_4)_2S_2O_8$ dilué dans 50,0 g d'eau.

Simultanément pendant une heure, on additionne à 85°C :

- 85,7 g d'acrylate d'éthyle (EA),

Le système est maintenu à cette température pendant deux heures supplémentaires.

Un échantillon (~5g) est alors prélevé et analysé par chromatographie d'exclusion stérique (SEC) dans du THF. Sa masse moléculaire moyenne en nombre mésurée Mn est égale à 37000 g/mol en équivalents polystyrène (calibration par des étalons de polystyrène linéaires). Son indice de polymolécularité Mw/Mn est égal à 1,9. Une analyse de l'échantillon par chromatographie gazeuse révèle que la conversion des monomères est supérieure à 99%.

Etape 3: Préparation d'un troisième bloc de polystyrène de masse moléculaire théorique d'environ 30 000 g/mol pour obtenir un copolymère tribloc polystyrène-bloc-poly(acrylate d'éthyle)-bloc-polystyrène "pS$_{30k}$-pEA$_{10k}$-pS$_{30k}$"

En réalité c'est une synthèse d'un copolymère statistique de styrène et d'acide méthacrylique. Rapport massique St/AMA = 98/2. Masse théorique visée : $M_n$ = 30000 g/mol. On se réfère à un bloc de polystyrène par soucis de simplicité de la terminologie.

On part du copolymère en émulsion obtenu précédemment à l'étape 2 après en avoir prélevé ~5 g pour analyse et sans arrêter le chauffage.

On introduit en continu pendant trois heures 0,390 g de persulfate d'ammonium $(NH_4)_2S_2O_8$ dilué dans 50,0 g d'eau. Simultanément pendant trois heures, on additionne à 85°C un mélange 3 comprenant:

- 50,0 g d'eau,
- 0,95 g de carbonate de sodium $Na_2CO_3$.

Simultanément on ajoute un mélange 4 comprenant :

- 257,1 g de styrène (St), et
- 5,14 g d'acide méthacrylique (AMA)

Après addition complète des divers ingrédients, l'émulsion de copolymère obtenue est maintenue à 85°C pendant une heure.

Puis on introduit 1,20 g de tert-butylbenzylperoxide en une seule fois et on démarre l'addition d'un mélange 5 comprenant :

- 0,600 g d'acide érythorbique
- 20,0 g d'eau.

On poursuit l'addition pendant 60 minutes. Après addition complète des divers ingrédients, l'émulsion est refroidie à ~25°C pendant une heure.

Un échantillon (~5g) est alors prélevé et analysé par chromatographie d'exclusion stérique (SEC) dans du THF. Sa masse moléculaire moyenne en nombre mésurée Mn est égale à 56800 g/mol en équivalents polystyrène (calibration par des étalons de polystyrène linéaires). Son indice de polymolécularité Mw/Mn est égal à 1,9.

Une analyse de l'échantillon par chromatographie gazeuse révèle que la conversion des monomères est supérieure à 99.8%.

Le produit obtenu est une dispersion dans l'eau du copolymère (latex), d'extrait sec d'environ 44%.

Exemple 1b: Préparation d'un copolymère tribloc polystyrène-bloc-poly(acrylate d'éthyle)-bloc-polystyrène "PS$_{25k}$-nEA$_{20k}$-pS$_{25k}$"

Le mode opératoire est basé sur un procédé qui peut se décomposer en trois phases distinctes, une première étape qui est l'obtention d'un bloc polystyrène, une deuxième étape qui est la synthèse d'un bloc poly(acrylate d'éthyle) à la suite du premier bloc et une troisième étape qui la synthèse d'un bloc polystyrène à la suite du deuxième bloc, pour obtenir le tribloc polystyrène-b-poly(acrylate d'éthyle)-b-polystyrène.

La synthèse de ce copolymère est réalisée dans un réacteur verré de 2 litres de type SVL. La charge utile maximum de ce type de réacteur est de 1,5 litres. La température interne du réacteur est régulée par un cryostat de type Huber. La mesure de la température est assurée par une sonde pt 100 plongeant dans le réacteur et servant à la régulation. Le mobile d'agitation est une ancre en inox. La vitesse de rotation du mobile est de l'ordre de 200 tr/min. Le réacteur est également équipé d'un dispositif de reflux (réfrigèrent à serpentin) suffisamment efficace pour permettre le reflux des monomères sans pertes de produit.

Le procédé mis en oeuvre est un procédé de polymérisation en émulsion dans l'eau, de type latex.

Etape 1: Préparation d'un premier bloc de polystyrène de masse moléculaire théorique d'environ 25000 g/mol "pS$_{25k}$"

En réalité c'est une synthèse d'un copolymère statistique de styrène et d'acide méthacrylique, avec rapport massique St/AMA = 98/2. Masse théorique visée : $M_n$ = 25000 g/mol. On se réfère à un bloc de polystyrène par soucis de simplicité de la terminologie.

En pied de cuve, on introduit, à température ambiante, 518,2 g d'eau, 6,250 g de dodecyl sulfate de sodium et 0,714 g de carbonate de sodium $Na_2CO_3$. Le mélange obtenu est agité pendant 30 minutes (200 tr/min) sous azote. La température est ensuite élevée à 75°C, puis on ajoute un mélange 1 comprenant :

- 17,86 g de styrène (St),
- 0,357 g d'acide méthacrylique (AMA), et
- 1,486 g de xanthate $(CH_3)(CO_2CH_3)CH-S(C=S)OCH_2CH_3$.

Le mélange est porté à 85°C, puis on introduit une solution de 0,085 g de persulfate de sodium $Na_2S_2O_8$ solubilisé dans 1,70 g d'eau.

Après 5 minutes, on démarre l'addition d'un mélange 2 comprenant :

- 160,7 g de styrène (St) et
- 3,21 g d'acide méthacrylique (AMA).

Simultanément on démarre l'addition d'un mélange 3 comprenant 0,255 g de persulfate de sodium $Na_2S_2O_8$ solubilisé dans 5,10 g d'eau.

On poursuit l'addition pendant 90 minutes. Après addition complète des divers ingrédients, l'émulsion de copolymère obtenue est maintenue à 85°C pendant deux heures.

Un échantillon (~5g) est alors prélevé et analysé par chromatographie d'exclusion stérique (SEC) dans du THF. Sa masse moléculaire moyenne en nombre mésurée Mn est égale à 22000 g/mol en équivalents polystyrène (calibration par des étalons de polystyrène linéaires). Son indice de polymolécularité Mw/Mn est égal à 2,2.

Une analyse de l'échantillon par chromatographie gazeuse révèle que la conversion des monomères est supérieure à 99%.

Etape 2: Préparation d'un deuxième bloc de poly(acrylate d'éthyle) de masse moléculaire théorique d'environ 10000 g/mol pour obtenir un copolymère dibloc polystyrène-bloc-poly(acrylate d'éthyle), "pS$_{25k}$-pEA$_{20k}$"

On part du copolymère en émulsion obtenu précédemment à l'étape 1 après en avoir prélevé ~5 g pour analyse et sans arrêter le chauffage.

On introduit en continu pendant 90 minutes 0,170 g de persulfate de sodium $Na_2S_2O_8$ dilué dans 3,4 g d'eau.

Simultanément pendant 90 minutes, on additionne à 85°C :

- 142,9 g d'acrylate d'éthyle (EA),

Le système est maintenu à cette température pendant deux heures supplémentaires.

Un échantillon (~5g) est alors prélevé et analysé par chromatographie d'exclusion stérique (SEC) dans du THF. Sa masse moléculaire moyenne en nombre mesurée Mn est égale à 32000 g/mol en équivalents polystyrène (calibration par des étalons de polystyrène linéaires). Son indice de polymolécularité Mw/Mn est égal à 2,6.

Une analyse de l'échantillon par chromatographie gazeuse révèle que la conversion des monomères est supérieure à 99%.

Etape 3: Préparation d'un troisième bloc de polystyrène de masse moléculaire théorique d'environ 25000 g/mol pour obtenir un copolymère tribloc polystyrène-bloc-poly(acrylate d'éthyle)-bloc-polystyrène "pS$_{25k}$-pEA$_{20k}$-pS$_{25k}$"

En réalité c'est une synthèse d'un copolymère statistique de styrène et d'acide méthacrylique. Rapport massique St/AMA = 98/2. Masse théorique visée : $M_n$ = 25000 g/mol. On se réfère à un bloc de polystyrène par soucis de simplicité de la terminologie.

On part du copolymère en émulsion obtenu précédemment à l'étape 2 après en avoir prélevé ~5 g pour analyse et sans arrêter le chauffage.

On introduit en continu pendant deux heures 0,340 g de persulfate de sodium $Na_2S_2O_8$ dilué dans 6,8 g d'eau. Simultanément pendant deux heures, on additionne à 85°C un mélange 4 comprenant:

- 97,90 g d'eau,
- 1,146 g de carbonate de sodium $Na_2CO_3$
- 3,75 g de dodecyl sulfate de sodium.

Simultanément on ajoute un mélange 5 comprenant :

- 178,6 g de styrène (St), et
- 3,57 g d'acide méthacrylique (AMA)

Après addition complète des divers ingrédients, l'émulsion de copolymère obtenue est maintenue à 85°C pendant deux heures.

Puis on introduit 0,500 g de tert-butylbenzylperoxide en une seule fois et on démarre l'addition d'un mélange 6 comprenant :

- 0,250 g d'acide érythorbique
- 5,0 g d'eau.

On poursuit l'addition pendant 60 minutes. Après addition complète des divers ingrédients, l'émulsion est refroidie à ~25°C pendant une heure.

Un échantillon (~5g) est alors prélevé et analysé par chromatographie d'exclusion stérique (SEC) dans du THF. Sa masse moléculaire moyenne en nombre mesurée Mn est égale à 40000 g/mol en équivalents polystyrène (calibration par des étalons de polystyrène linéaires). Son indice de polymolécularité Mw/Mn est égal à 2,9.

Une analyse de l'échantillon par chromatographie gazeuse révèle que la conversion des monomères est supérieure à 99.8%.

Le produit obtenu est une dispersion dans l'eau du copolymère (latex), d'extrait sec d'environ 45%.

Exemple 1c: Préparation d'un copolymère tribloc polystyrène-bloc-poly(acrylate d'éthyle)-bloc-polystyrène "$pS_{32,5k}$-$pEA_{5k}$-$pS_{32,5k}$"

Le mode opératoire est basé sur un procédé qui peut se décomposer en trois phases distinctes, une première étape qui est l'obtention d'un bloc polystyrène, une deuxième étape qui est la synthèse d'un bloc poly(acrylate d'éthyle) à la suite du premier bloc et une troisième étape qui la synthèse d'un bloc polystyrène à la suite du deuxième bloc, pour obtenir le tribloc polystyrène-b-poly(acrylate d'ethyle)-b-polystyrène.

La synthèse de ce copolymère est réalisée dans un réacteur verré de 2 litres de type SVL. La charge utile maximum de ce type de réacteur est de 1,5 litres. La température interne du réacteur est régulée par un cryostat de type Huber. La mesure de la température est assurée par une sonde pt 100 plongeant dans le réacteur et servant à la régulation. Le mobile d'agitation est une ancre en inox. La vitesse de rotation du mobile est de l'ordre de 200 tr/min. Le réacteur est également équipé d'un dispositif de reflux (réfrigèrent à serpentin) suffisamment efficace pour permettre le reflux des monomères sans pertes de produit.

Le procédé mis en oeuvre est un procédé de polymérisation en émulsion dans l'eau, de type latex.

Etape 1: Préparation d'un premier bloc de polystyrène de masse moléculaire théorique d'environ 32500 g/mol "$pS_{32,5k}$"

En réalité c'est une synthèse d'un copolymère statistique de styrène et d'acide méthacrylique, avec rapport massique St/AMA = 98/2. Masse théorique visée : $M_n$ = 32500 g/mol. On se réfère à un bloc de polystyrène par soucis de simplicité de la terminologie.

En pied de cuve, on introduit, à température ambiante, 515,0 g d'eau, 6,250 g de dodecyl sulfate de sodium et 0,929 g de carbonate de sodium $Na_2CO_3$. Le mélange obtenu est agité pendant 30 minutes (200 tr/min) sous azote. La température est ensuite élevée à 75°C, puis on ajoute un mélange 1 comprenant :

- 23,21 g de styrène (St),
- 0,464 g d'acide méthacrylique (AMA), et

EP 1 858 940 B1

- 1,486 g de xanthate $(CH_3)(CO_2CH_3)CH-S(C=S)OCH_2CH_3$.

Le mélange est porté à 85°C, puis on introduit une solution de 0,085 g de persulfate de sodium $Na_2S_2O_8$ solubilisé dans 1,70 g d'eau.

Après 5 minutes, on démarre l'addition d'un mélange 2 comprenant :

- 208,9 g de styrène (St) et
- 4,18 g d'acide méthacrylique (AMA).

Simultanément on démarre l'addition d'un mélange 3 comprenant 0,255 g de persulfate de sodium $Na_2S_2O_8$ solubilisé dans 5,10 g d'eau.

On poursuit l'addition pendant 80 minutes. Après addition complète des divers ingrédients, l'émulsion de copolymère obtenue est maintenue à 85°C pendant deux heures.

Un échantillon (~5g) est alors prélevé et analysé par chromatographie d'exclusion stérique (SEC) dans du THF. Sa masse moléculaire moyenne en nombre mesurée Mn est égale à 29000 g/mol en équivalents polystyrène (calibration par des étalons de polystyrène linéaires). Son indice de polymolécularité Mw/Mn est égal à 2,2.

Une analyse de l'échantillon par chromatographie gazeuse révèle que la conversion des monomères est supérieure à 99%.

Etape 2: Préparation d'un deuxième bloc de poly(acrylate d'éthyle) de masse moléculaire théorique d'environ 10000 g/mol pour obtenir un copolymère dibloc polystyrène-bloc-poly(acrylate d'éthyle), " $pS_{32,5k}$-$pEA_{5k}$"

On part du copolymère en émulsion obtenu précédemment à l'étape 1 après en avoir prélevé ~5 g pour analyse et sans arrêter le chauffage.

On introduit en continu pendant 90 minutes 0,170 g de persulfate de sodium $Na_2S_2O_8$ dilué dans 3,4 g d'eau.

Simultanément pendant 90 minutes, on additionne à 85°C :

- 35,7 g d'acrylate d'éthyle (EA),

Le système est maintenu à cette température pendant deux heures supplémentaires.

Un échantillon (~5g) est alors prélevé et analysé par chromatographie d'exclusion stérique (SEC) dans du THF. Sa masse moléculaire moyenne en nombre mesurée Mn est égale à 34000 g/mol en équivalents polystyrène (calibration par des étalons de polystyrène linéaires). Son indice de polymolécularité Mw/Mn est égal à 2,3.

Une analyse de l'échantillon par chromatographie gazeuse révèle que la conversion des monomères est supérieure à 99%.

Etape 3: Préparation d'un troisième bloc de Polystyrène de masse moléculaire théorique d'environ 32500 g/mol pour obtenir un copolymère tribloc polystyrène-bloc-poly(acrylate d'éthyle)-bloc-polystyrène "$pS_{35,5k}$-$pEA_{5k}$-$pS_{32,5k}$"

En réalité c'est une synthèse d'un copolymère statistique de styrène et d'acide méthacrylique. Rapport massique St/AMA = 98/2. Masse théorique visée : $M_n$ = 32500 g/mol. On se réfère à un bloc de polystyrène par soucis de simplicité de la terminologie.

On part du copolymère en émulsion obtenu précédemment à l'étape 2 après en avoir prélevé ~5 g pour analyse et sans arrêter le chauffage.

On introduit en continu pendant deux heures 0,340 g de persulfate de sodium $Na_2S_2O_8$ dilué dans 6,8 g d'eau. Simultanément pendant deux heures, on additionne à 85°C un mélange 4 comprenant:

- 104,4 g d'eau,
- 1,468 g de carbonate de sodium $Na_2CO_3$
- 3,75 g de dodecyl sulfate de sodium.

Simultanément on ajoute un mélange 5 comprenant :

- 1232,1 g de styrène (St), et
- 4,64 g d'acide méthacrylique (AMA)

Après addition complète des divers ingrédients, l'émulsion de copolymère obtenue est maintenue à 85°C pendant deux heures.

Puis on introduit 0,500 g de tert-butylbenzylperoxide en une seule fois et on démarre l'addition d'un mélange 6 comprenant :

- 0,250 g d'acide érythorbique
- 5,0 g d'eau.

On poursuit l'addition pendant 60 minutes. Après addition complète des divers ingrédients, l'émulsion est refroidie à ~25°C pendant une heure.

Un échantillon (~5g) est alors prélevé et analysé par chromatographie d'exclusion stérique (SEC) dans du THF. Sa masse moléculaire moyenne en nombre mesurée $M_n$ est égale à 50000 g/mol en équivalents polystyrène (calibration par des étalons de polystyrène linéaires). Son indice de polymolécularité $M_w/M_n$ est égal à 2,6.

Une analyse de l'échantillon par chromatographie gazeuse révèle que la conversion des monomères est supérieure à 99.8%.

Le produit obtenu est une dispersion dans l'eau du copolymère (latex), d'extrait sec d'environ 45%.

Exemple 2: Composition

On réalise la composition suivante, comprenant le copolymère de l'exemple 1 dans la phase aqueuse:

| Ingrédients | Nature ou Dénomination INCI | Quantité en poids tel quel (%) | Quantité en poids tel quel (%) | Quantité en poids tel quel (%) | |
|---|---|---|---|---|---|
| Pecosil PS-100 | Dimethicone PEG-7 Phosphate | 2 | 2 | 2 | Phase huileuse |
| DC246 | Cyclohexasiloxane | 5 | 5 | 5 | |
| Parleam | Hydrogenated Polyisobutene | 5 | 5 | 5 | |
| Eau | 69,15 | 69,15 | 69,15 | 69,15 | Phase aqueuse |
| Carbopol 980 | Carbomer | 0,4 | 0,4 | 0,4 | |
| NaOH | | 0,3 | 0,3 | 0,3 | |
| Rhodicare S | Xanthan Gum | 0,4 | 0,4 | 0,4 | |
| Pemulen TR2 | Acrylates/C10-30 Alkyl Acrylate Crosspolyler | 0,25 | 0,25 | 0,25 | |
| Phenotip | Conservateur | 1 | 1 | 1 | |
| Copolymère de l'exemple 1a | | | | 16,5 | |
| Copolymère de l'exemple 1b | | | 16,5 | | |
| Copolymère de l'exemple 1c | | 16,5 | | | |

Exemple 3: Composition

On réalise la composition suivante, comprenant le copolymère de l'exemple 1 dans la phase aqueuse:

| Ingrédients | Nature ou Dénomination INCI | Quantité en poids tel quel (%) | Quantité en poids tel quel (%) | Quantité en poids tel quel (%) | |
|---|---|---|---|---|---|
| Cosmacol PSE | Dimiristyl Tartrate; Cetearyl Alcohol; C12-C15 PARETH-7; PPG-25-Laureth 25 | 1,5 | 1,5 | 1,5 | Phase huileuse |
| Arlacel 165FL | Glyceryl Stearate; PEG-100 Stearate | 2 | 2 | 2 | |
| Stearyl Alcohol | Stearyl Alcohol | 1 | 1 | 1 | |
| CD 246 | Cyclohexasiloxane | 10 | 10 | 10 | |
| Nipabutyl | Conservateur | 0,15 | 0,15 | 0,15 | |
| Eau | | 67,85 | 67,85 | 67,85 | Phase aqueuse |
| Methylparaben | Conservateur | 0,25 | 0,25 | 0,25 | |
| Chlorphénésine | Conservateur | 0,25 | 0,25 | 0,25 | |
| EDTA Disodium | | 0,05 | 0,05 | 0,05 | |
| AMPS | Ammomium Polyacryloyldimethyl Taurate | 0,4 | 0,4 | 0,4 | |
| Rhodicare S | Xanthan Gum | 0,2 | 0,2 | 0,2 | |
| Vantocyl CHG | Conservateur | 0,25 | 0,25 | 0,25 | |
| Copolymère de l'exemple 1a | | | | 16,5 | |
| Copolymère de l'exemple 1b | | | 16,5 | | |
| Copolymère de l'exemple 1c | | 16,5 | | | |

**Revendications**

1.  Composition non cosmétique comprenant un copolymère linéaire à blocs A-[B-A]$_n$ ou B-[A-2]$_n$ ou [A-B]$_n$ dans lequel A est un bloc comprenant au moins 60% en poids d'unités dérivant de styrène, B est un bloc comprenant au moins 60% en poids d'unités dérivant d'acrylate d'éthyle ou de méthacrylate d'éthyle, et n est un nombre supérieur ou égal à 1, **caractérisé en ce que** le rapport en poids entre les unités de dérivant de styrène et les unités dérivant de d'acrylate d'éthyle ou de méthacrylate d'éthyle est supérieur ou égal à 1, et un vecteur.

2.  Composition selon la revendication 1, **caractérisé en ce que** le rapport en poids entre les unités de dérivant de styrène et les unités dérivant de d'acrylate d'éthyle ou de méthacrylate d'éthyle est supérieur ou égal à 2,01, de préférence 5.

3.  Composition selon l'une des revendications précédentes, **caractérisé en ce que** le copolymère est un copolymère tribloc A-B-A, le bloc A comprenant au moins 90% en poids d'unités dérivant de styrène, et le bloc B comprenant au moins 90% en poids d'unités dérivant de d'acrylate d'éthyle ou de méthacrylate d'éthyle.

4.  Composition selon l'une des revendications précédentes, **caractérisé en ce que** le copolymère est sous forme d'une solution dans un solvant, ou sous forme d'une dispersion dans un milieu aqueux.

5.  Composition selon l'une des revendications précédentes **caractérisé en ce que** le copolymère présente une masse moléculaire moyenne en comprise entre 20000 et 1000000 g/mol, de préférence entre 50000 et 200000 g/mol.

6. Composition selon l'une des revendications précédentes, **caractérisé en ce que** le bloc A présente une masse moléculaire moyenne comprise entre 1000 et 200000 g/mol, de préférence entre 10000 et 100000 g/mol.

7. Composition selon l'une des revendications précédentes, **caractérisé en ce que** le bloc B présente une masse moléculaire moyenne comprise entre 1000 et 100000 g/mol, de préférence entre 2000 et 50000 g/mol.

8. Composition selon l'une des revendications précédentes, **caractérisé en ce que** le copolymère présente une recouvrance instantanée $R_i < 50\%$, de préférence $R_1 < 30\%$, et une recouvrance retardée $R_{2h} < 70\%$, de préférence $R_{2n} < 50\%$, après un allongement de 30%.

9. Composition selon l'une quelconque des revendications 1 à 8, qui est une composition adaptée pour le traitement et/ou la modification et/ou le revêtement de surfaces textiles, de surfaces domestiques ou industrielles, et/ou de surfaces de bâtiments et travaux publics.

10. Composition selon la revendication 9, qui est:

- une composition détergente pour surfaces dures,
- une lessive,
- un adoucissant pour textile,
- une composition pour faciliter le repassage de textiles, ou
- une composition de revêtement, par exemple une peinture, ou un revêtement à liant hydraulique comme un apprêt mural ou du plâtre.

11. Utilisation d'une composition selon l'une des revendications 1 à 8, pour le traitement et/ou la modification et/ou le revêtement de surfaces textiles, de surfaces domestiques ou industrielles, et/ou de surfaces de bâtiments et travaux publics.

**Claims**

1. Non-cosmetic composition comprising a linear block copolymer A-[B-A]$_n$ or B-[A-B]$_n$ or [A-B]$_n$ in which A-is a block comprising at least 50 wt% of units that derive from styrene, B is a block comprising at least 50 wt% of units that derive from ethyl acrylate or from ethyl methacrylate, and n is a number greater than or equal to 1, **characterized in that** the weight ratio between the units that derive from styrene and the units that derive from ethyl acrylate or from ethyl methacrylate is greater than or equal to 1, and a vector.

2. The copolymer according to Claim 1, **characterized in that** the weight ratio between the units that derive from styrene and the units that derive from ethyl acrylate or from ethyl methacrylate is greater than or equal to 2.01, preferably 5.

3. The copolymer according to either of the preceding claims, **characterized in that** the copolymer is an A-B-A triblock copolymer, the block A comprising at least 90 wt% of units that derive from styrene, and the block B comprising at least 90 wt% of units that derive from ethyl acrylate or from ethyl methacrylate.

4. The copolymer according to one of the preceding claims, **characterized in that** the copolymer is in the form of a solution in a solvent, or in the form of a dispersion in an aqueous medium.

5. The copolymer according to one of the preceding claims, **characterized in that** the copolymer has an average molecular weight between 20 000 and 1 000 000 g/mol, preferably between 50 000 and 200 000 g/mol.

6. The copolymer according to one of the preceding claims, **characterized in that** the block A has an average molecular weight between 1000 and 200 000 g/mol, preferably between 10 000 and 100 000 g/mol.

7. The copolymer according to one of the preceding claims, **characterized in that** the block B has an average molecular weight between 1000 and 100 000 g/mol, preferably between 2000 and 50 000 g/mol.

8. The copolymer according to one of the preceding claims, **characterized in that** the copolymer has an instantaneous recovery $R_i < 50\%$ preferably $R_i < 30\%$, and a delayed recovery $R_{2h} < 70\%$, preferably $R_{2h} < 50\%$, after an elongation of 30%.

9. Composition according to any one of Claims 1 to 8, which is a composition suitable for treating and/or modifying and/or coating fabric surfaces, domestic or industrial surfaces, and/or the surfaces of buildings and civil engineering works.

10. Composition according to Claim 9, which is:

   - a detergent composition for hard surfaces;
   - a washing powder;
   - a fabric softener;
   - a composition for making fabrics easier to iron; or
   - a coating composition, for example a paint, or a hydraulic binder coating such as a wall primer or plaster.

11. Use of a composition according to any one of Claims 1 to 8, for treating and/or modifying and/or coating fabric surfaces, domestic or industrial surfaces, and/or the surfaces of buildings and civil engineering works.

**Patentansprüche**

1. Nichtkosmetische Zusammensetzung, umfassend ein lineares Blockcopolymer A-[B-A]$_n$ oder B-[A-B]$_n$ oder [A-B]$_n$, worin A ein Block ist, der mindestens 50 Gew.-% Einheiten, die sich von Styrol ableiten, umfasst, B ein Block ist, der mindestens 50 Gew.-% Einheiten, die sich von Ethylacrylat oder Ethylmethacrylat ableiten, umfasst, und n eine Zahl größer gleich 1 ist, **dadurch gekennzeichnet, dass** das Gewichtsverhältnis zwischen den Einheiten, die sich von Styrol ableiten, und den Einheiten, die sich von Ethylacrylat oder Ethylmethacrylat ableiten, größer gleich 1 ist, und einen Träger.

2. Zusammensetzung nach Anspruch 1, **dadurch gekennzeichnet, dass** das Gewichtsverhältnis zwischen den Einheiten, die sich von Styrol ableiten, und den Einheiten, die sich von Ethylacrylat oder Ethylmethacrylat ableiten, größer gleich 2,01, vorzugsweise 5, ist.

3. Zusammensetzung nach einem der vorhergehenden Ansprüche, **dadurch gekennzeichnet, dass** es sich bei dem Copolymer um ein A-B-A-Triblockcopolymer handelt, wobei der Block A mindestens 90 Gew.-% Einheiten, die sich von Styrol ableiten, umfasst und der Block B mindestens 90 Ges.-% Einheiten, die sich von Ethylacrylat oder Ethylmethacrylat ableiten, umfasst.

4. Zusammensetzung nach einem der vorhergehenden Ansprüche, **dadurch gekennzeichnet, dass** das Copolymer in Form einer Lösung in einem Lösungsmittel oder in Form einer Dispersion in einem wässrigen Medium vorliegt.

5. Zusammensetzung nach einem der vorhergehenden Ansprüche, **dadurch gekennzeichnet, dass** das Copolymer eine mittlere Molmasse zwischen 20.000 und 1.000.000 g/mol, vorzugsweise zwischen 50.000 und 200.000 g/mol, aufweist.

6. Zusammensetzung nach einem der vorhergehenden Ansprüche, **dadurch gekennzeichnet, dass** der Block A eine mittlere Molmasse zwischen 1000 und 200.000 g/mol, vorzugsweise zwischen 10.000 und 100.000 g/mol, aufweist.

7. Zusammensetzung nach einem der vorhergehenden Ansprüche, **dadurch gekennzeichnet, dass** der Block B eine mittlere Molmasse zwischen 1000 und 100.000 g/mol, vorzugsweise zwischen 2000 und 50.000 g/mol, aufweist.

8. Zusammensetzung nach einem der vorhergehenden Ansprüche, **dadurch gekennzeichnet, dass** das Copolymer eine sofortige Erholung $R_i < 50\%$, vorzugsweise $R_i < 30\%$, und eine verzögerte Erholung $R_{2h} < 70\%$, vorzugsweise $R_{2h} < 50\%$, nach einer Dehnung von 30% aufweist.

9. Zusammensetzung nach einem der Ansprüche 1 bis 8, bei der es sich um eine Zusammensetzung zur Behandlung und/oder Modifizierung und/oder Beschichtung von textilen Oberflächen, Oberflächen im Haus oder in der Industrie und/oder Oberflächen im Hoch- und Tiefbau handelt.

**10.** Zusammensetzung nach Anspruch 9, bei der es sich um:

- eine Reinigungszusammensetzung für harte Oberflächen,
- ein Waschmittel,
- einen Weichmacher für Textilien,
- eine Zusammensetzung zum Erleichtern des Bügelns von Textilien oder
- eine Beschichtungszusammensetzung, beispielsweise ein Anstrichmittel, oder eine Beschichtung mit hydraulischem Bindemittel wie eine Wandgrundierung oder Gips
handelt.

**11.** Verwendung einer Zusammensetzung nach einem der Ansprüche 1 bis 8 zur Behandlung und/oder Modifizierung und/oder Beschichtung von textilen Oberflächen, Oberflächen im Haus oder in der Industrie und/oder Oberflächen im Hoch- und Tiefbau.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03095513 A
- WO 0116187 A
- WO 9858974 A
- WO 0075207 A
- WO 0142312 A
- WO 9801478 A
- WO 9931144 A
- WO 0226836 A
- WO 0210223 A
- WO 9903894 A
- WO 9630421 A
- WO 0039169 A
- WO 0037507 A

**Littérature non-brevet citée dans la description**

- **Otu et al.** *Makromol. Chem. Rapid. Commun.,* 1982, vol. 3, 127
- **Tatemoto et al.** Jap. Daikin Kogyo Co ltd, 1975, vol. 50, 991
- **Matyjaszewski et al.** *Macromolecules,* 1995, vol. 28, 2093
- **D. Braun et al.** *Macromol. Symp.,* 1996, vol. 111, 63
- **Wayland et al.** *J.Am.Chem.Soc.,* 1994, vol. 116, 7973